# EUROPÄISCHE PATENTANMELDUNG

(11) **EP 3 000 901 A1**
(43) Veröffentlichungstag der Anmeldung: **30.03.2016**
(21) Anmeldenummer: 14186186.4
(22) Anmeldetag: 24.09.2014
(51) Int. Cl.: C21C 5/52, F27D 19/00, F27D 21/00

(54) **Metallindustrieanlage und Verfahren zur Verfolgung eines Gefäßes, insbesondere eines metallurgischen Gefäßes**

(71) Anmelder: Primetals Technologies Austria GmbH, 4031 Linz (AT)
(72) Erfinder: Rohrhofer, Andreas, 4020 Linz (AT); Hartl, Franz, 4020 Linz (AT); Kuehas, Thomas, 4225 Luftenberg (AT); Kurzmann, Thomas, 4614 Marchtrenk (AT)
(74) Vertreter: Metals@Linz

(57) **Zusammenfassung**

Die Erfindung offenbart eine Metallindustrieanlage mit mehreren Verarbeitungsstationen, welche ein Gefäß (1), insbesondere ein metallurgisches Gefäß (1), zumindest teilweise durchläuft, wobei das Gefäß (1) mit einem Transponder (2) mit Transponderdaten, ausgerüstet ist, wobei in der Metallindustrieanlage zumindest eine erste Trackingposition (9), welche zumindest eine erste Lesestation (7) umfasst, zum Kommunizieren des an der ersten Trackingposition (9) vorbeifahrenden Gefäßes (1) mit Hilfe des Transponders (2), insbesondere zum Identifizieren des vorbeifahrenden Gefäßes (1) mit dem Transponderdaten, vorgesehen ist und wobei in der Metallindustrieanlage zumindest ein Gateway (6) vorgesehen ist, und wobei zumindest die erste Lesestation (7) zur Kommunikation, insbesondere zur Übermittlung der Transponderdaten, mit dem Gateway (6) kabellos verbunden ist und wodurch das Gefäß (1) vereinfacht verfolgbar ist.

## Beschreibung

In metallurgischen Industrieanlagen werden metallurgische Gefäße eingesetzt, um Roheisenschmelzen, Stahlschmelzen, flüssige Schlacke, Schrott und dergleichen zu transportieren. Zum Beispiel sind im Stahlwerk in den verschiedenen Anlagenteilen (z.B. Konverter, Elektrolichtofenbogen etc.) mehrere Gefäße (je nach Kapazität des Stahlwerks 30 und mehr) im Einsatz. Diese durchlaufen verschiedene Routen zwischen den Anlagenteilen. Die Anlagenbediener und Kranfahrer müssen sicherstellen, dass das richtige Gefäß am richtigen Anlagenort abgestellt ist. Sowohl aus dem Gesichtspunkt der Qualität (möglichst geringe Abkühlung des Roheisens/Stahlbades im Gefäß) als auch aus Energiespargründen, ist ein möglichst hoher Heißeinsatz von Gefäßen anzustreben. Die Gefäße im Stahlwerk werden z.B. beheizt, bevor Stahl aus dem Elektrolichtofenbogen/Konverter in sie geleert wird. Bestimmte Stahlqualitäten sollten außerdem nicht nacheinander im gleichen Gefäß transportiert werden, da die geringen Restmengen sich chemisch beeinflussen können (z.B. bestimmte Edelstahlgüten oder auch Stahllegierungen).

Aus diesem Grund werden die im Betrieb eingesetzten metallurgischen Gefäße an verschiedenen Trackingpositionen erfasst. Die so erfassten Informationen werden an ein gemeinsames Leitsystem weiter vermittelt. Je nach Größe des Werks können diese Trackingpositionen weit auseinander liegen: z.B. bei Stahlpfannen als metallurgischem Gefäß sind das der Konverter, die Pfannenofen, die Umleergrube, die Pfannenfeuer, etc. bei einem Schlackenkübel als metallurgischem Gefäß sind das der Lichtbogenofen, die Schlackengrube, bei einem Torpedowagen als metallurgischem Gefäß sind das der Hochofen, die Umleergrube etc. Es werden ausschließlich kabelgebundene Verbindungen verwendet. Lange Kabel zur Datenverbindung der einzelnen Trackingpositionen zu einer gemeinsamen PLC (Program-mable Logic Controller = speicherprogrammierbare Steuerung) sind die Folge daraus und verursachen sehr hohe Kosten und sind auch sehr fehleranfällig.

Eine erste Aufgabe ist die Angabe einer Metallindustrieanlage mit mehreren Verarbeitungsstationen, zum vereinfachten, fehlerfreien Nachverfolgen eines Gefäßes, welches das oben genannte Problem löst. Die zweite Aufgabe betrifft ein vereinfachtes Verfahren zum Nachverfolgen eines Gefäßes, welches das oben genannte Problem löst.

Die erste Aufgabe wird gelöst durch die Angabe einer Metallindustrieanlage mit mehreren Verarbeitungsstationen, welche ein Gefäß, insbesondere ein metallurgisches Gefäß, zumindest teilweise durchläuft, wobei das Gefäß mit einem Transponder mit Transponderdaten, ausgerüstet ist, und wobei in der Metallindustrieanlage zumindest eine erste Trackingposition, welche zumindest eine erste Lesestation umfasst, zum Kommunizieren des an der ersten Trackingposition vorbeifahrenden Gefäßes mit Hilfe des Transponders, insbesondere zum Identifizieren des vorbeifahrenden Gefäßes mit den Transponderdaten, vorgesehen ist und wobei in der Metallindustrieanlage zumindest ein Gateway vorgesehen ist, und wobei zumindest die erste Lesestation zur Kommunikation, insbesondere zur Übermittlung der Transponderdaten, mit dem Gateway kabellos verbunden ist und wodurch das Gefäß vereinfacht verfolgbar ist.

Die zweite Aufgabe wird gelöst durch die Angabe eines Verfahrens zur Verfolgung eines metallurgischen Gefäßes in einer Metallindustrieanlage mit mehreren Verarbeitungsstationen, welche das metallurgische Gefäß zumindest teilweise durchläuft, wobei das metallurgische Gefäß mit einem Transponder mit Transponderdaten ausgerüstet wird, und wobei das an einer ersten Trackingposition vorbeifahrende Gefäß mit Hilfe des Transponders mit der ersten Trackingposition, umfassend zumindest eine erste Lesestation, kommuniziert, insbesondere das vorbeifahrende Gefäß mit den Transponderdaten identifiziert wird, und wobei zumindest die erste Lesestation mit zumindest einem in der Metallindustrieanlage vorgesehenen Gateway kabellos kommuniziert, insbesondere die Transponderdaten kabellos übermittelt, und wobei das Gefäß dadurch vereinfacht nachverfolgt wird.

Für die weitere Beschreibung und Erläuterung werden standes-übliche Formulierungen verwendet, welche zum Teil nicht auf Deutsch übersetzt werden, dennoch im deutschen Sprachgebrauch dem Fachmann verständlich sind.

Die Erfindung offenbart eine kabellose Datenverbindung von Trackingpositionen eines Verfolgungssystems, welches innerhalb eines Werks zur Verfolgung von metallurgischen Gefäßen verwendet wird. Für eine Verfolgung von metallurgischen Gefäßen werden typischerweise die Gefäße mit einem Transponder ausgerüstet. Dieser Transponder kann fest oder lose mit dem Gefäß verbunden sein. An mehreren Orten innerhalb eines Werkgeländes, oder aber auch außerhalb des Werksgeländes, befinden sich die Trackingpositionen. Wird ein Gefäß mit Transponder an solch einer Trackingposition vorbei geführt, wird dies durch die dort installierte Lesestation erkannt. Da die einzelnen Trackingpositionen weit voneinander entfernt sein können, werden diese über eine kabellose Schnittstelle untereinander bzw. über ein zentrales Gateway miteinander verbunden. Als zentrales Gateway oder auch Access Point wird jener Wireless Knoten bezeichnet, welcher für die Organisation des so gebildeten Netzwerks verantwortlich ist. Die kabellose Schnittstelle, mit welcher die einzelnen Lesestationen mit dem zentralen Gateway verbunden sind, können beispielsweise mit WLAN, Wireless HART, ISA100 oder jedem anderen Wireless Standard, mit welchem Daten übertragen werden können, realisiert werden.

Durch die Erfindung kann ein Verfolgungssystem von metallurgischen Gefäßen einfach installiert werden, ohne die laufende Produktion zu stören. Erfindungsgemäß können Trackingpositionen auch an schwierigst zugänglichen Positionen realisiert werden. Auch ergibt sich durch die Erfindung eine Kosteneinsparung durch einen Wegfall der Kabel für die Datenanbindung, so dass sich die Installationskosten schnell amortisieren. Vorteilhafterweise ergibt sich durch die Erfindung ein geringer Instandhaltungsaufwand, da keine Kabel vorhanden sind, die beschädigt werden können. Auch ergibt sich eine vereinfachte Zustandsüberwachung der Gefäße.

In den Unteransprüchen sind weitere vorteilhafte Maßnahmen aufgelistet, die beliebig miteinander kombiniert werden können, um weitere Vorteile zu erzielen.

Vorzugsweise ist eine zweite Trackingposition vorgesehen, welche zumindest eine zweite Lesestation umfasst, zum Kommunizieren des vorbeifahrenden Gefäßes mit Hilfe des Transponders, insbesondere zum Identifizieren des vorbeifahrenden Gefäßes mit den Transponderdaten. Dabei sind zumindest die erste und die zweite Trackingposition mit dem Gateway kabellos als auch untereinander kabellos verbunden, wodurch das Gefäß kabellos verfolgbar ist. Die einzelnen Trackingpositionen können sich entweder alle zu einem zentralen Gateway (Access Point) vernetzen oder, z.B. im Falle eines Wireless HART oder ISA100 Netzwerks in Form eines vernetzten Gitters (einem sogenannten Meshgrid) verbinden. Bei einem Gitter kann sich jede Trackingposition mit jeder anderen Trackingposition vernetzen. Dies hat den Vorteil, dass sehr große Flächen mit nur einem Gateway abgedeckt werden können, gleichzeitig im Falle eines Ausfalls einer Trackingposition kann aber auch eine Alternativroute über andere Knoten zur Verfügung gestellt werden. Dies dient der Erhöhung der Ausfallssicherheit. Es können sich auch entweder alle Trackingpositionen oder nur vereinzelte Trackingpositionen zur Verfolgung von metallurgischen Gefäßen kabellos miteinander verknüpfen.

Alternativ oder zusätzlich weist die Metallindustrieanlage eine zweite Trackingposition auf, welche zumindest eine zweite Lesestation umfasst, zum Kommunizieren des vorbeifahrenden Gefäßes mit Hilfe des Transponders, insbesondere zum Identifizieren des vorbeifahrenden Gefäßes mit den Transponderdaten und wobei zumindest die erste und die zweite Trackingposition untereinander kabellos verbunden sind, und wodurch die zweite Trackingposition über die erste Trackingposition mit dem Gateway kabellos verbunden ist und wodurch das Gefäß kabellos verfolgbar ist.

In einer beispielhaften Ausgestaltung umfasst das Gateway eine kabellose Schnittstelle zur kabellosen Übermittlung zumindest der Transponderdaten von einer kabellosen Schnittstelle der Lesestation. Die kabellose Schnittstelle, mit welcher die einzelnen Lesestationen mit dem zentralen Gateway verbunden sind, können beispielsweise mit WLAN, Wireless HART, ISA100 oder jedem anderen Wireless Standard, mit welchem Daten übertragen werden können, realisiert werden. Das zentrale Gateway hat wiederum eine Schnittstelle, mit welcher die Daten einem Leitsystem bzw. einer Benutzersteuerung zur Verfügung gestellt werden können.

In bevorzugter Ausgestaltung umfasst die Lesestation zumindest eine Antenne zum Kommunizieren mit dem Transponder, ein Lesegerät und ein Auswertesystem mit einer kabellosen Schnittstelle, zum kabellosen Senden der Transponderdaten an das Gateway. Diese Antenne kann beispielsweise eine RFID Antenne oder aber auch eine SAW-Antenne zum Erkennen von SAW Transpondern sein. Auch das Lesegerät kann ein Gerät zum Auslesen von RFID Transpondern oder auch ein Gerät zum Auslesen von SAW-Transpondern sein. Das Auswertesystem wertet die vom Lesegerät erfassten Transponderdaten aus und sendet diese über die kabellose Schnittstelle an ein zentrales Gateway. Alle weiteren in der Anlage installierten Lesestationen tun dies ebenso. Das Gateway wertet die Information, z.B. wann welches Gefäß wo ist, aus, und gibt dies an ein zentrales Leitsystem weiter.

Bevorzugt umfasst die Lesestation zumindest eine Antenne zum Kommunizieren mit dem Transponder und ein Lesegerät mit einer kabellosen Schnittstelle, zum kabellosen Senden zumindest der Transponderdaten an das Gateway. Auch kann hier dem Gateway ein Auswertesystem nachgeschaltet sein. D.h. das Auswertesystem ist nicht an/in der Lesestation vorgesehen, sondern beim zentralen Gateway. In diesem Fall holt das Auswertesystem alle Daten vom zentralen Gateway ab, wertet diese aus und stellt sie dann einem Leitsystem zur Verfügung. Eine Anordnung ohne Auswertesystem ist ebenfalls denkbar. In diesem Fall werden dem Leitsystem Rohdaten zur Verfügung gestellt.

Bevorzugt weist die Lesestation zumindest einen Sensor, insbesondere einen Neigungs- und/oder Beschleunigungssensor, auf, welcher die Neigungsdaten der Antenne ermittelt. Hierbei ist der Sensor beispielsweise an der Antenne vorgesehen. Das Auswertesystem kann daher als zusätzliche Eingabe zumindest den aus diesem Neigungssensor und/oder Beschleunigungssensor gelieferten Datensatz heranziehen. Die Neigungssensoren und/oder Beschleunigungssensoren werden vorzugsweise an der Antenne, insbesondere der RFID-Antenne oder SAW-Antenne befestigt. Aus dem Neigungssensor und/oder Beschleunigungssensor wird daher die Neigung der Antenne ermittelt. Das Ergebnis kann verwendet werden, um festzustellen, ob die Antenne von z.B. einem vorbeifahrenden Fahrzeug, oder Kran verstellt wurde. Somit ist eine Überwachung der korrekten Ausrichtung der Antenne durch Neigungs-/Beschleunigungssensoren möglich.

Bevorzugt umfasst die Lesestation einen Temperatursensor, zum Messen der Temperatur der Antenne und/oder der Lesestation selber. Das Auswertesystem kann daher als zusätzliche Eingabe zumindest den Datensatz dieses Temperatursensors heranziehen. Mit diesem kann die Temperatur der Antenne oder die Temperatur der Auswerteelektronik selbst überwacht werden. Wird eine Überschreitung der maximal zulässigen Temperatur festgestellt, kann dies einem verbundenen Zustandsüberwachungssystem bzw. einem Instandhaltungsmanagement-System gemeldet werden. Somit ist eine Überwachung der in der Elektronik auftretenden Temperaturen und gegebenenfalls eine Alarmierung eines Instandhalters möglich.

Bevorzugt ist zumindest eine Repeater Station vorgesehen, welche zumindest die von der ersten Trackingposition empfangenen Daten kabellos weiterleitet. Dies dient dazu die Reichweite der kabellosen Datenübertragung zu erhöhen. Diese Repeater Stationen erfassen keine Messdaten, sie leiten nur die kabellos übertragenen Messwerte an die nächste Station weiter.

Bevorzugt ist der Transponder ein RFID-Transponder. Auch andere Transponder, die geeignet sind, können jedoch eingesetzt werden.

Bevorzugt ist die zumindest eine Lesestation mittels Batterie mit elektrischer Energie versorgbar. Auch kann die zumindest eine Lesestation ein Auswertesystem umfassen, welches zumindest die Batterietemperatur und/oder Batteriespannung und/oder Batteriestromstärke überwacht. D.h. dass die einzelnen Lesestationen vorzugsweise von einer Batterie versorgt werden. In diesem Fall ist die Lesestation vollkommen kabellos. Regelmäßige Batteriewechsel müssen in diesem Fall eingeplant werden. Wird die Spannungsversorgung als Batterie ausgeführt, kann das Auswertesystem daher so ausgeführt werden, dass sie die Spannungsversorgung überwacht, z.B. hinsichtlich Batterietemperatur, Spannung, Stromstärke, Restkapazität. Stellt das Auswertesystem fest, dass die Batterie einen kritischen Zustand erreicht, kann der Bediener über die Benutzersteuerung benachrichtigt werden. Genauso vorstellbar ist, dass das Auswertesystem ein verbundenes Zustandsüberwachungssystem (nachfolgend als Condition Monitoring System bezeichnet) alarmiert oder in einem Instandhaltungsmanagement-System einen Instandhaltungsauftrag erzeugt.

Auch kann zusätzlich oder alternativ die zumindest eine Lesestation mittels eines Kabels mit elektrischer Energie versorgbar sein. Zusätzlich oder alternativ kann die zumindest eine Lesestation durch Energy Harvesting mit elektrischer Energie versorgbar sein. Dies kann vor allem dann der Fall sein, wenn ein Batteriewechsel nicht erwünscht ist oder dient als zusätzliche Sicherheit für eine störungsfreie Stromversorgung.

Bevorzugt ist der Transponder durch gesendete Funksignale der zumindest einen Lesestation abfragbar.

Bei der Metallindustrieanlage handelt es sich bevorzugt um eine metallurgische Industrieanlage, insbesondere ein Stahlwerk. Das Verfahren kann an der erfindungsgemäßen Metallindustrieanlage durchgeführt werden.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
- FIG 1: schematisch eine erfindungsgemäße Anlage,
- FIG 2: ein erstes Beispiel einer erfindungsgemäßen Trackingposition in der Anlage,
- FIG 3: ein zweites Beispiel einer erfindungsgemäßen Trackingposition in der Anlage,
- FIG 4: ein drittes Beispiel einer erfindungsgemäßen Trackingposition in der Anlage,
- FIG 5: ein Stahlwerk mit Trackingposition.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Die Erfindung betrifft eine kabellose Datenverbindung von Trackingpositionen eines Verfolgungssystems, welches innerhalb eines Werks zur Verfolgung von metallurgischen Gefäßen verwendet wird.

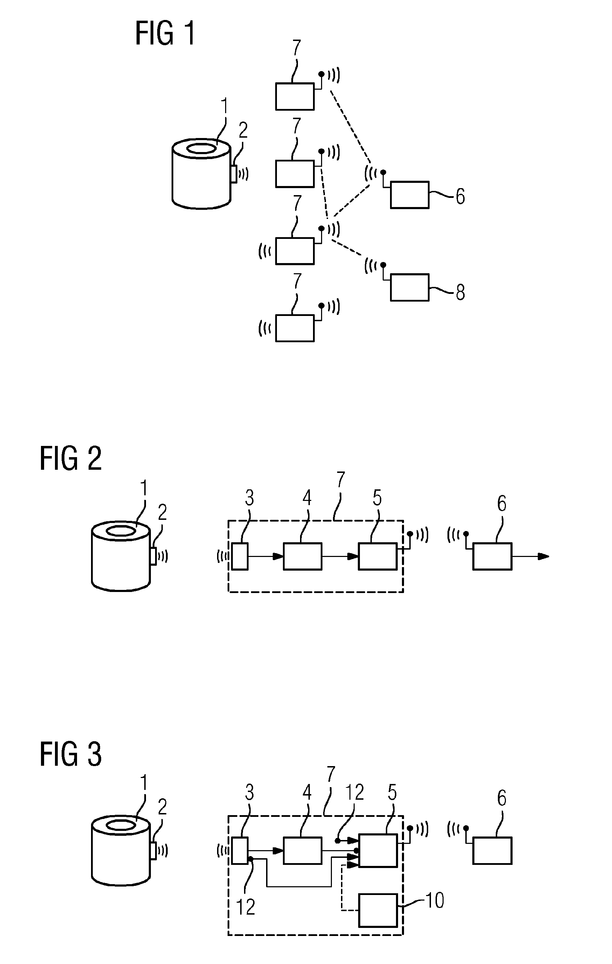

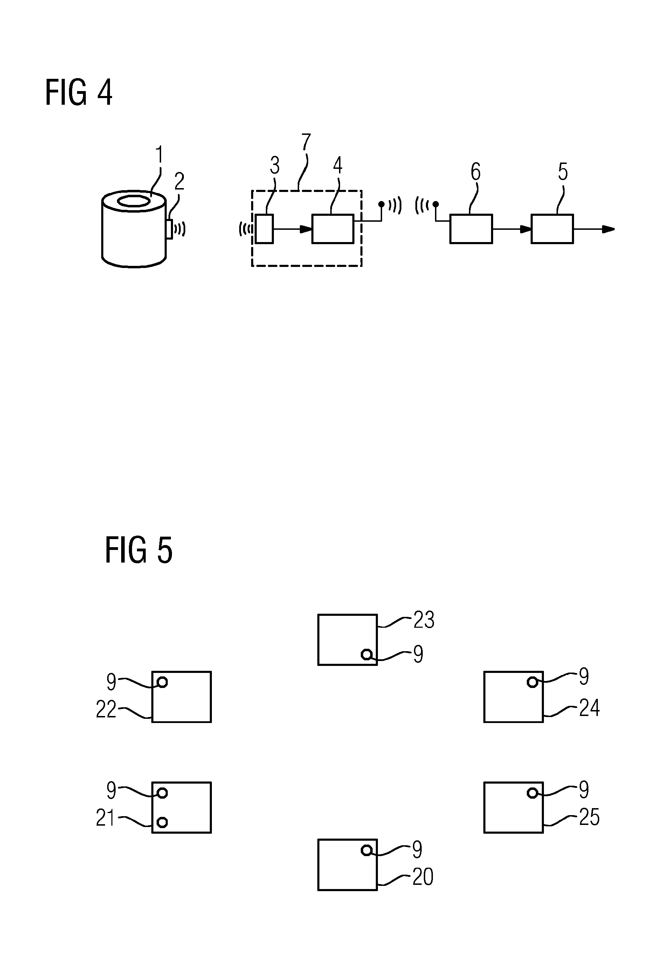

FIG 1 zeigt schematisch eine erfindungsgemäße Anlage. Für eine Verfolgung von metallurgischen Gefäßen werden typischerweise die Gefäße 1 mit einem Transponder 2 ausgerüstet. Dieser Transponder 2 kann fest oder lose mit dem Gefäß 1 verbunden sein. An mehreren Orten innerhalb eines Werks (denkbar ist aber auch außerhalb des Werksgeländes) befinden sich sogenannte Trackingpositionen 9 (FIG 5). Dabei wird unter Trackingposition 9 (FIG 5) der Ort verstanden, an dem die Daten für das Tracking durch eine dort vorhandene Lesestation 7 abgefragt werden (Ortungsposition). Ziel eines Tracking ist meist das Abbilden der beobachteten tatsächlichen Bewegung zur technischen Verwendung. Der Transponder 2, bevorzugt ein RFID-Transponder, wird mit Transponderdaten bespielt und an dem Gefäß 1 angebracht. Dies wird bevorzugt vor der ersten Inbetriebnahme des Gefäßes 1 vorgenommen. Aber auch danach können die bereits eingesetzten Gefäße 1 mit einem solchen Transponder 2 und den entsprechenden modifizierten Daten leicht ausgerüstet werden, so dann auch bereits in Betrieb genommene Gefäße 1 mit dieser Technik leicht nachgerüstet werden können. Wird ein Gefäß 1 mit Transponder 2 an solch einer Trackingposition 9 (FIG 5) vorbei geführt, wird dies durch die dort installierte Lesestation 7 erkannt. Da die einzelnen Lesestationen 7 weit voneinander entfernt sein können, werden diese über eine kabellose Schnittstelle untereinander bzw. über ein zentrales Gateway 6 miteinander kabellos verbunden. Ein Gateway 6 kann Rechnernetze verbinden, die z.B. auf völlig unterschiedlichen Netzwerkprotokollen basieren können. Als zentrales Gateway 6 oder auch Access Point wird jener Wireless Knoten bezeichnet, welcher für die Organisation des Netzwerks verantwortlich ist. Die einzelnen Lesestationen 7 können sich entweder alle zu diesem zentralen Gateway vernetzen oder sich im Falle eines Wireless HART oder ISA100 Netzwerks in Form eines vernetzten Gitters (Meshgrid) verbinden. Bei einem Gitter kann sich jede Lesestationen 7 mit jeder anderen Lesestationen 7 vernetzen. Dies hat den Vorteil, dass sehr große Flächen mit nur einem Gateway 6 abgedeckt werden können, gleichzeitig im Falle eines Ausfalls einer Lesestationen 7 kann jedoch eine Alternativroute über andere Lesestationen 7 zur Verfügung gestellt werden. Dies führt zu einer Erhöhung der Ausfallssicherheit. FIG 1 zeigt unter anderem einen solchen Fall. Hier ist eine Lesestationen 7, welche zudem mit einer anderen Lesestationen 7 und mit dem Gateway 6 verbunden ist. Auch können die Lesestationen 7 nur teilweise untereinander kabellos verbunden sein, oder auch vollständig oder auch nur mit dem Gateway 6. Es können sich daher alle Lesestationen 7 oder nur vereinzelte Lesestationen 7 zur Verfolgung von metallurgischen Gefäßen 1 kabellos miteinander verknüpfen.

Um die Reichweite der kabellosen Datenübertragung zu erhöhen, ist es möglich sogenannte Repeater Stationen 8 vorzusehen. Dabei ist ein Repeater in der Kommunikationstechnik ein elektrischer oder auch optischer Signalverstärker oder -aufbereiter zur Vergrößerung der Reichweite eines Signals. Diese Repeater Stationen 8 erfassen keine Messdaten, sie leiten nur die kabellos übertragenen Messwerte an die nächste Station weiter. Dabei kann die nächste Station eine Trackingposition 9, ein Gateway 6, oder eine andere Repeater Station 8 sein. FIG 1 zeigt ebenfalls eine solche Repeater Station 8.

Die kabellose Schnittstelle, mit welcher die einzelnen Lesestationen 7 mit dem/den Gateway/s 6 verbunden sind, können beispielsweise mit WLAN, Wireless HART, ISA100 oder jedem anderen Wireless Standard, mit welchem Daten übertragen werden können, realisiert werden. Auch können sie unter anderem selber damit verbunden sein.

FIG 2 zeigt ein erstes Bespiel einer erfindungsgemäßen Trackingposition 9 (FIG 5) in der Anlage. In diesem Beispiel besteht eine Lesestation 7 aus einer Antenne 3 zur Kommunikation mit dem Transponder 2 mit einem Lesegerät 4 und einem Auswertesystem 5 mit kabelloser Schnittstelle. Das Auswertesystem 5 wertet die vom Lesegerät 4 erfassten Transponderdaten aus und sendet diese über die kabellose Schnittstelle an ein Gateway 6. Alle weiteren in der Anlage installierten Lesestationen 7 tun dies ebenso. Das zentrale Gateway 6 hat wiederum eine Schnittstelle, mit welcher die Daten einem Leitsystem bzw. einer Benutzersteuerung zur Verfügung gestellt werden können.

FIG 3 zeigt ein zweites Bespiel einer erfindungsgemäßen Trackingposition 9 (FIG 5) in der Anlage. Das Auswertesystem 5 zieht hier als zusätzliche Eingabe zumindest die Daten eines Neigungssensors oder Beschleunigungssensors 10 heran. Der Neigungssensor oder Beschleunigungssensor 10 wird vorzugsweise an der Antenne 3 befestigt. Aus dem Neigungssensor oder Beschleunigungssensor 10 wird die Neigung der Antenne 3 ermittelt. Das Ergebnis kann verwendet werden, um festzustellen, ob die Antenne 3 von z.B. einem vorbei fahrenden Fahrzeug, oder Kran verstellt wurde.

Das Auswertesystem 5 kann als zusätzliche Eingabe zumindest die Daten eines Temperatursensors 11,12 heranziehen. Mit diesem Temperatursensor 11 kann die Temperatur der Antenne 3 oder die Temperatur der Auswerteelektronik selbst (Temperatursensor 12) überwacht werden. Auch kann lediglich ein Temperatursensor vorhanden sein, welcher die Antennentemperatur und die Auswerteelektroniktemperatur überwacht. Wird in dem Gateway 6 anschließend eine Überschreitung der maximal zulässigen Temperatur festgestellt, kann dies einem verbundenen Condition Monitoring System (Zustandsüberwachungssystem) bzw. einem Instandhaltungsmanagement-System gemeldet werden.

FIG 4 zeigt ein drittes Bespiel einer erfindungsgemäßen Trackingposition 9 (FIG 5) in der Anlage. Hier ist das Auswertesystem 5 nicht an der Lesestation 7, sondern beim zentralen Gateway 6 vorgesehen. In diesem Fall holt das Auswertesystem 5 alle Daten vom zentralen Gateway 6 ab, wertet diese aus und stellt sie dann einem Leitsystem zur Verfügung. Eine Anordnung ohne Auswertesystem 5 ist ebenfalls denkbar (nicht gezeigt). In diesem Fall werden dem Leitsystem Rohdaten zur Verfügung gestellt (nicht gezeigt).

Die einzelnen Lesestationen 7 werden vorzugsweise von einer Batterie versorgt. In diesem Fall ist die Lesestation 7 vollkommen kabellos. Regelmäßige Batteriewechsel müssen in diesem Fall eingeplant werden. Ist dieser Batteriewechsel nicht erwünscht, kann eine kabelgebundene Spannungsversorgung der Lesestation 7 vorgesehen werden. Eine Energieversorgung über Energy Harvesting ist ebenfalls denkbar. Wird die Spannungsversorgung als Batterie ausgeführt, kann das Auswertesystem 5 so ausgeführt werden, dass sie die Spannungsversorgung überwacht, z.B. hinsichtlich Batterietemperatur, Spannung und Stromstärke. Stellt das Auswertesystem 5 fest, dass die Batterie einen kritischen Zustand erreicht, kann der Bediener über die Benutzersteuerung benachrichtigt werden. Genauso vorstellbar ist, dass das Auswertesystem 5 ein verbundenes Condition Monitoring System alarmiert oder in einem Instandhaltungsmanagement-System einen Instandhaltungsauftrag erzeugt.

Das Auswertesystem 5 kann auch den Zustand des verbundenen Lesegeräts 4 bzw. von sich selbst überwachen und an ein Condition Monitoring System bzw. ein InstandhaltungsManagement-System melden.

FIG 5 zeigt sehr schematisch und sehr beispielhaft eine Anlage mit Trackingpositionen 9 in einem Stahlwerk. Dabei kann als Gefäß 1 mit Transponder 2 (FIG 1) beispielsweise eine Stahlpfanne mit Transponder (nicht gezeigt) verwendet werden. Dabei können an den Stationen Pfannenauskleidungsstation 20, Hallenkran 21, Vakuumanlage 22, Pfannentransportwagen 23, Pfannenofen 24, Pfannendrehturm 25, Pfannenvorwärmer 26, Trackingpositionen 9 angebracht werden. Dabei können als Transponderdaten aufgebracht werden, um welche Pfanne es sich handelt und welche Lebensdauer diese Pfannenauskleidung noch hat. Auch kann z.B. die gemessene Temperatur als Transponderdaten aufgenommen werden. Durch diese Transponderdaten kann die aktuelle Standzeit der Pfanne ermittelt werden. Auch kann die Anzahl der Durchläufe ermittelt werden und die Lebensdauer der Pfannenauskleidung dadurch bestimmt werden. Eine Rückschreibung vom Gateway auf den Transponder ist u.U. auch möglich. Auch müssen nicht an allen Trackingpositionen jeweils alle Daten ermittelt und übertragen werden.

## Patentansprüche

1. Metallindustrieanlage mit mehreren Verarbeitungsstationen, welche ein Gefäß (1), insbesondere ein metallurgisches Gefäß (1), zumindest teilweise durchläuft,
**dadurch gekennzeichnet, dass** das Gefäß (1) mit einem Transponder (2) mit Transponderdaten, ausgerüstet ist,
wobei in der Metallindustrieanlage zumindest eine erste Trackingposition (9), welche zumindest eine erste Lesestation (7) umfasst, zum Kommunizieren des an der ersten Trackingposition (9) vorbeifahrenden Gefäßes (1) mit Hilfe des Transponders (2), insbesondere zum Identifizieren des vorbeifahrenden Gefäßes (1) mit dem Transponderdaten, vorgesehen ist und wobei in der Metallindustrieanlage zumindest ein Gateway (6) vorgesehen ist, und wobei zumindest die erste Lesestation (7) zur Kommunikation, insbesondere zur Übermittlung der Transponderdaten, mit dem Gateway (6) kabellos verbunden ist und wodurch das Gefäß (1) vereinfacht verfolgbar ist.

2. Metallindustrieanlage mit mehreren Verarbeitungsstationen nach Anspruch 1,
**dadurch gekennzeichnet, dass** die Metallindustrieanlage eine zweite Trackingposition (9) aufweist, welche zumindest eine zweite Lesestation (7) umfasst, zum Kommunizieren des vorbeifahrenden Gefäßes (1) mit Hilfe des Transponders (2), insbesondere zum Identifizieren des vorbeifahrenden Gefäßes (1) mit den Transponderdaten und wobei zumindest die erste und die zweite Trackingposition (9) mit dem Gateway (6) kabellos als auch untereinander kabellos verbunden sind und wodurch das Gefäß (1) kabellos verfolgbar ist.

3. Metallindustrieanlage mit mehreren Verarbeitungsstationen nach einem der vorhergehenden Ansprüche,
**dadurch gekennzeichnet, dass** die Metallindustrieanlage eine zweite Trackingposition (9) aufweist, welche zumindest eine zweite Lesestation (7) umfasst, zum Kommunizieren des vorbeifahrenden Gefäßes (1) mit Hilfe des Transponders (2), insbesondere zum Identifizieren des vorbeifahrenden Gefäßes (1) mit den Transponderdaten und wobei zumindest die erste und die zweite Trackingposition (9) untereinander kabellos verbunden sind, und wodurch die zweite Trackingposition (9) über die erste Trackingposition (9) mit dem Gateway (6) verbunden ist und wodurch das Gefäß (1) kabellos verfolgbar ist.

4. Metallindustrieanlage mit mehreren Verarbeitungsstationen nach einem der vorhergehenden Ansprüche,
**dadurch gekennzeichnet, dass** das Gateway (6) eine kabellose Schnittstelle umfasst, zur kabellosen Übermittlung zumindest der Transponderdaten von einer kabellosen Schnittstelle der Lesestation (7).

5. Metallindustrieanlage mit mehreren Verarbeitungsstationen nach einem der Ansprüche 1 bis 4,
**dadurch gekennzeichnet, dass** die Lesestation (7) zumindest eine Antenne (3) zum Kommunizieren mit dem Transponder und ein Lesegerät (4) mit einer kabellosen Schnittstelle umfasst, zum kabellosen Senden zumindest der empfangenen Transponderdaten an das Gateway (6).

6. Metallindustrieanlage mit mehreren Verarbeitungsstationen nach Anspruch 5 ,
**dadurch gekennzeichnet, dass** dem Gateway (6) ein Auswertesystem (5) nachgeschaltet ist.

7. Metallindustrieanlage mit mehreren Verarbeitungsstationen nach einem der Ansprüche 1 bis 6,
**dadurch gekennzeichnet, dass** die Lesestation (7) zumindest eine Antenne (3) zum Kommunizieren mit dem Transponder, ein Lesegerät (4) und ein Auswertesystem (5) mit einer kabellosen Schnittstelle umfasst, zum kabellosen Senden zumindest der Transponderdaten an das Gateway (6).

8. Metallindustrieanlage mit mehreren Verarbeitungsstationen nach einem der Ansprüche 5 bis 7,
**dadurch gekennzeichnet, dass** die Lesestation (7) zumindest einen Sensor, insbesondere einen Neigungs- und/oder Beschleunigungssensor (10) aufweist, welcher die Neigungsdaten der Antenne (3) ermittelt.

9. Metallindustrieanlage mit mehreren Verarbeitungsstationen nach Anspruch 8,
**dadurch gekennzeichnet, dass** der Sensor an der Antenne (3) vorgesehen ist.

10. Metallindustrieanlage mit mehreren Verarbeitungsstationen nach einem der vorhergehenden Ansprüche,
**dadurch gekennzeichnet, dass** die Lesestation (7) einen Temperatursensor (11,12) umfasst, zum Messen der Temperatur der Lesestation (7), insbesondere einer Antenne (3) in der Lesestation (7) und eine Überschreitung der maximal zulässigen Temperatur anzeigbar ist.

11. Metallindustrieanlage mit mehreren Verarbeitungsstationen nach einem der vorhergehenden Ansprüche,
**dadurch gekennzeichnet, dass** die Metallindustrieanlage zumindest eine Repeater Station (8) umfasst, welche zumindest die von der ersten Trackingposition (9) empfangenen Daten kabellos weiterleitet.

12. Metallindustrieanlage mit mehreren Verarbeitungsstationen nach einem der vorhergehenden Ansprüche,
**dadurch gekennzeichnet, dass** der Transponder (2) ein RFID-Transponder (2) ist.

13. Metallindustrieanlage mit mehreren Verarbeitungsstationen nach einem der vorhergehenden Ansprüche,
**dadurch gekennzeichnet, dass** die zumindest eine Lesestation (7) mittels Batterie mit elektrischer Energie versorgbar ist.

14. Metallindustrieanlage mit mehreren Verarbeitungsstationen nach Anspruch 13,
**dadurch gekennzeichnet, dass** die zumindest eine Lesestation (7) ein Auswertesystem (5) umfasst, welches zumindest die Batterietemperatur und/oder Batteriespannung und/oder Batteriestromstärke überwacht.

15. Metallindustrieanlage mit mehreren Verarbeitungsstationen nach einem der vorhergehenden Ansprüche,
**dadurch gekennzeichnet, dass** die zumindest eine Lesestation (7) mittels eines Kabels mit elektrischer Energie versorgbar ist.

16. Metallindustrieanlage mit mehreren Verarbeitungsstationen nach einem der vorhergehenden Ansprüche,
**dadurch gekennzeichnet, dass** die zumindest eine Lesestation (7) durch Energy Harvesting mit elektrischer Energie versorgbar ist.

17. Metallindustrieanlage mit mehreren Verarbeitungsstationen nach einem der vorhergehenden Ansprüche,
**dadurch gekennzeichnet, dass** der Transponder (2) durch gesendete Funksignale der zumindest einen Lesestation (7) abfragbar ist.

18. Metallindustrieanlage mit mehreren Verarbeitungsstationen nach einem der vorhergehenden Ansprüche, wobei es sich bei der Metallindustrieanlage um eine metallurgische Industrieanlage, insbesondere ein Stahlwerk, handelt.

19. Verfahren zur Verfolgung eines metallurgischen Gefäßes (1) in einer Metallindustrieanlage mit mehreren Verarbeitungsstationen, welche das metallurgische Gefäß (1) zumindest teilweise durchläuft,
**dadurch gekennzeichnet, dass** das metallurgische Gefäß (1) mit einem Transponder (2) mit Transponderdaten, ausgerüstet wird,
wobei das an einer ersten Trackingposition (9) vorbei fahrende Gefäß (1) mit Hilfe des Transponders (2) mit der ersten Trackingposition (9), umfassend zumindest einer ersten Lesestation (7), kommuniziert, insbesondere das vorbeifahrende Gefäß (1) mit den Transponderdaten identifiziert wird,
wobei zumindest die erste Lesestation (7) mit zumindest einem vorgesehenen Gateway (6) kabellos kommuniziert, insbesondere die Transponderdaten kabellos übermittelt, und wobei das Gefäß (1) dadurch vereinfacht nachverfolgt wird.

20. Verfahren zur Verfolgung eines metallurgischen Gefäßes (1) nach Anspruch 19,
**dadurch gekennzeichnet, dass** die Metallindustrieanlage eine zweite Trackingposition (9) aufweist, welche zumindest eine zweite Lesestation (7) umfasst, zum Kommunizieren des vorbeifahrenden Gefäßes (1) mit Hilfe des Transponders (2), insbesondere zum Identifizieren des vorbeifahrenden Gefäßes (1) mit den Transponderdaten und wobei zumindest die erste und die zweite Trackingposition (9) mit dem Gateway (6) kabellos als auch untereinander kabellos verbunden werden und wobei das Gefäß (1) dadurch kabellos nachverfolgt wird.

21. Verfahren zur Verfolgung eines metallurgischen Gefäßes (1) nach einem der Ansprüche 19 bis 20,
**dadurch gekennzeichnet, dass** die Metallindustrieanlage eine zweite Trackingposition (9) aufweist, welche zumindest eine zweite Lesestation (7) umfasst, zum Kommunizieren des vorbeifahrenden Gefäßes (1) mit Hilfe des Transponders (2), insbesondere zum Identifizieren des vorbeifahrenden Gefäßes (1) mit den Transponderdaten und wobei zumindest die erste und die zweite Trackingposition (9) untereinander kabellos verbunden sind, und wodurch die zweite Trackingposition (9) über die erste Trackingposition (9) mit dem Gateway (6) kabellos verbunden wird und wobei das Gefäß (1) dadurch kabellos nachverfolgt wird.

22. Verfahren zur Verfolgung eines metallurgischen Gefäßes (1) nach einem der Ansprüche 19 bis 21,
**dadurch gekennzeichnet, dass** das kabellose Senden zumindest der Transponderdaten an das Gateway (6) durch eine kabellose Schnittstelle in der Lesestation (7) erfolgt.

23. Verfahren zur Verfolgung eines metallurgischen Gefäßes (1) nach einem der Ansprüche 19 bis 22 ,
**dadurch gekennzeichnet, dass** dem Gateway (6) ein Auswertesystem (5) nachgeschaltet wird.

24. Verfahren zur Verfolgung eines metallurgischen Gefäßes (1) nach einem der Ansprüche 19 bis 23,
**dadurch gekennzeichnet, dass** die Lesestation (7) eine Antenne (3) zum Kommunizieren mit dem Transponder (2) umfasst und die Ermittlung der Neigung der Antenne (3) durch einen Sensor, insbesondere einem Neigungs- und/oder Beschleunigungssensor (10), erfolgt.

25. Verfahren zum Verfolgung eines metallurgischen Gefäßes (1) nach Anspruch 24,
**dadurch gekennzeichnet, dass** der Sensor an der Antenne (3) angebracht wird.

26. Verfahren zur Verfolgung eines metallurgischen Gefäßes (1) nach einem der Ansprüche 19 bis 25,
**dadurch gekennzeichnet, dass** ein Messen der Temperatur der Lesestation (7), insbesondere der Antenne (3) der Lesestation (7), durch einen Temperatursensor (11,12) in der Lesestation (7) erfolgt und eine Überschreitung der maximal zulässigen Temperatur gemeldet wird.

27. Verfahren zur Verfolgung eines metallurgischen Gefäßes (1) nach einem der Ansprüche 19 bis 26,
**dadurch gekennzeichnet, dass** eine kabellose Weiterleitung von zumindest einer auf der Metallindustrieanlage angebrachten Repeater Station (8) erfolgt, welche zumindest die von der ersten Trackingposition (9) empfangenen Daten weiterleitet.

28. Verfahren zur Verfolgung eines metallurgischen Gefäßes (1) nach einem der Ansprüche 19 bis 27,
**dadurch gekennzeichnet, dass** die Versorgung der zumindest einen Lesestation (7) mit elektrischer Energie durch eine Batterie erfolgt.

29. Verfahren zur Verfolgung eines metallurgischen Gefäßes (1) nach Anspruch 28,
**dadurch gekennzeichnet, dass** eine Überwachung zumindest der Batterietemperatur und/oder der Batteriespannung und/oder der Batteriestromstärke durch ein Auswertesystem (5) in der Lesestation (7) erfolgt.

30. Verfahren zur Verfolgung eines metallurgischen Gefäßes (1) nach einem der Ansprüche 19 bis 29,
**dadurch gekennzeichnet, dass** die Versorgung der zumindest einen Lesestation (7) mit elektrischer Energie durch ein Kabel erfolgt.

31. Verfahren zur Verfolgung eines metallurgischen Gefäßes (1) nach einem der Ansprüche 19 bis 30,
**dadurch gekennzeichnet, dass** die Versorgung der zumindest einen Lesestation (7) mit elektrischer Energie durch Energy Harvesting erfolgt.

32. Verfahren zur Verfolgung eines metallurgischen Gefäßes (1) nach einem der Ansprüche 19 bis 31,
**dadurch gekennzeichnet, dass** die Lesestation (7) Funksignale zum Abfragen des Transponders (2) sendet.
